# EUROPÄISCHE PATENTANMELDUNG

(11) **EP 4 556 776 A1**
(43) Veröffentlichungstag der Anmeldung: **21.05.2025**
(21) Anmeldenummer: 24203674.7
(22) Anmeldetag: 30.09.2024
(51) Int. Cl.: F16L 55/128, F16L 55/38, F16L 55/34

(54) **SEPARATIONSMOLCH UND SEPARATIONSVERFAHREN**

(30) Priorität: 14.11.2023 DE 102023131620
(71) Anmelder: Westnetz GmbH, 44139 Dortmund (DE)
(72) Erfinder: Becher, Simon, 48599 Gronau (DE); Niebialek, Sascha, 45894 Gelsenkirchen (DE)
(74) Vertreter: Bals & Vogel Patentanwälte PartGmbB

(57) **Zusammenfassung**

Die Erfindung betrifft einen Separationsmolch (10) zum Separieren (202) von einem Medium (M) in einer Rohrleitung (150) und zum Abdichten des Separationsmolchs (10) gegen die Rohrleitung (150). Der Separationsmolch (10) umfasst einen Grundkörper (20), eine zumindest abschnittsweise aufblasbare Dichtvorrichtung (30) zur Abdichtung des Separationsmolchs (10) gegen die Rohrleitung (150) und eine Separationsvorrichtung (40), wobei die Separationsvorrichtung (40) zum Separieren (202) des Mediums (M) aus der Rohrleitung (150) in zumindest zwei Medium-Bestandteile (A, B) und zum Aufblasen 204 der Dichtvorrichtung (30) mit einem Medium-Bestandteil (A) ausgestaltet ist. Die Erfindung betrifft ferner ein Separationsverfahren (200) zum Separieren (202) von einem Medium (M) in einer Rohrleitung (150) durch einen Separationsmolch (10) und zum Abdichten des Separationsmolchs (10) gegen die Rohrleitung (150).

## Beschreibung

Die vorliegende Erfindung betrifft einen Separationsmolch zum Separieren von einem Medium in einer Rohrleitung und zum Abdichten des Separationsmolchs gegen die Rohrleitung.

Die derzeitig öffentlich bekannten Molche werden für eine Vielzahl an Funktionen im Bereich der Wartung und dem Betrieb innerhalb von Rohrleitungen, insbesondere Verteilnetzleitungen, verwendet. Für das beispielhafte Szenario eines Fluidwechsels einer Rohrleitung, insbesondere einen Fluidwechsel der Rohrleitung auf Wasserstoff, ist im bekannten Stand der Technik zumeist eine Spülung der Leitung mit einem Inertgas notwendig, um Reinheits- und Sicherheitsanforderungen für den Betrieb der Rohrleitungen zu erfüllen. Auch nach Neubau-, Austausch- und/oder Wartungsarbeiten an Rohrleitungen und einem anschließenden zumindest abschnittsweisen Befüllen oder Neubefüllen der Rohrleitungen ist zumeist eine Verdrängung von Luft und/oder Wasser aus der Rohrleitung mittels Hilfsfluiden wie einem Inertgas üblich, bevor die Rohrleitung mit dem eigentlichen Versorgungsmedium geflutet wird.

Für die Inbetriebnahme, die Wiederinbetriebnahme und/oder einen Fluidwechsel von langen Rohleitungsabschnitten ist dabei nachteilig eine entsprechend große Menge an Spülgasen, wie beispielsweise Inertgasen, notwendig, was einen großen Kosten-, Zeit- und Logistikaufwand erfordert.

Es ist daher Aufgabe der vorliegenden Erfindung, die oben beschriebenen Nachteile im Stand der Technik zu beheben oder zumindest teilweise zu beheben. Insbesondere ist es Aufgabe der Erfindung, einen Separationsmolch und ein Separationsverfahren bereitzustellen, mit denen ein Separieren von einem Medium in einer Rohrleitung besonders einfach ermöglicht wird.

Die voranstehende Aufgabe wird durch die Patentansprüche gelöst. Insbesondere wird die Aufgabe gelöst durch einen Separationsmolch zum Separieren von einem Medium in einer Rohrleitung mit den Merkmalen des unabhängigen Anspruchs 1. Ferner wird die Aufgabe gelöst durch ein Separationsverfahren mit den Merkmalen des unabhängigen Anspruchs 13. Weitere Vorteile und Details der Erfindung ergeben sich aus den Unteransprüchen, der Beschreibung und den Zeichnungen. Dabei gelten Merkmale, die im Zusammenhang mit dem erfindungsgemäßen Separationsmolch beschrieben sind, selbstverständlich auch im Zusammenhang mit dem erfindungsgemäßen Separationsverfahren und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe gelöst durch einen Separationsmolch zum Separieren von einem Medium in einer Rohrleitung und zum Abdichten des Separationsmolchs gegen die Rohrleitung, Der Separationsmolch umfasst einen Grundkörper, eine zumindest abschnittsweise aufblasbare Dichtvorrichtung zum Abdichten des Separationsmolchs gegen die Rohrleitung und eine Separationsvorrichtung, wobei die Separationsvorrichtung zum Separieren des Mediums aus der Rohrleitung in zumindest zwei Medium-Bestandteile und zum Aufblasen der Dichtvorrichtung mit einem Medium-Bestandteil ausgestaltet ist.

Der Kern der Idee des Separationsmolchs ist es, durch den Separationsmolch eine fluiddichte Trennung innerhalb der Rohrleitung zwischen dem Rohrleitungsraum vor und hinter dem Separationsmolch zu erzeugen. Dafür wird der Separationsmolch in die Rohrleitung eingebracht und dichtet durch die zumindest abschnittsweise aufblasbare Dichtvorrichtung den Separationsmolch, insbesondere den Grundkörper, gegen die Rohrleitung ab. Für das Abdichten durch die Dichtvorrichtung wird durch die Separationsvorrichtung das Mediums aus der Rohrleitung in zumindest zwei Medium-Bestandteile separiert und die Dichtvorrichtung mit einem der Medium-Bestandteile aufgeblasen. Der zweite Medium-Bestandteil oder die restlichen Medium-Bestandteile werden bevorzugt aus der Separationsvorrichtung und/oder dem Separationsmolch ausgeschieden und/oder durch eine später beschriebene Speichervorrichtung gespeichert. Ein Ausscheiden der zweiten Medium-Bestandteile oder der restlichen Medium-Bestandteile erfolgt bevorzugt in den Rohleitungsraum vor dem Separationsmolch, also bevorzugt in den Rohrleitungsraum, aus dem das Medium entnommen wurde. Mit anderen Worten werden die zweiten Medium-Bestandteile oder die restlichen Medium-Bestandteile bevorzugt nach vorne aus dem Separationsmolch ausgeschieden.

Die Separationsvorrichtung ist bevorzugt fluidkommunizierend mit der Dichtvorrichtung verbunden, um den Medium-Bestandteil in die Dichtvorrichtung zu fördern. Die Separationsvorrichtung ist bevorzugt innerhalb des Grundkörpers des Separationsmolchs ausgestaltet. Die Dichtvorrichtung ist bevorzugt als zumindest abschnittsweise aufblasbare Vorrichtung, beispielsweise als aufblasbare Polstervorrichtung, als aufblasbare Fluidvorrichtung und/oder als aufblasbarer Schlauch, ausgestaltet.

Die Rohrleitung ist im Rahmen der Erfindung bevorzugt als Verteilnetzleitung, beispielsweise im Sinne von einer Erdgasleitung und/oder einer bisher als Erdgasleitung genutzten Rohrleitung, zu verstehen.

Anschaulich und bespielhaft beschrieben, ermöglicht der erfindungsgemäße Separationsmolch einen Fluidwechsel in einer Rohrleitung von Luft zu Wasserstoff. Eine Vermischung von Sauerstoff und Wasserstoff ist aufgrund des großen Zündbereichs eines daraus entstehenden Gemisches unbedingt zu vermeiden. Für den beispielhaften Fluidwechsel wird das Medium Luft von der Separationsvorrichtung bevorzugt aus dem Rohrleitungsraum vor dem Separationsmolch aktiv oder passiv entnommen und zumindest in die Medium-Bestandteile Sauerstoff und Stickstoff separiert. Der Stickstoff wird durch die Separationsvorrichtung zum Aufblasen der Dichtvorrichtung verwendet. Somit wird vorteilhaft durch den Separationsmolch eine Abdichtung der Rohrleitung vor und hinter dem Separationsmolch ermöglicht und mit dem Stickstoff ein vorteilhaftes Inertgas zur Abdichtung verwendet. Der Separationsmolch verhindert somit vorteilhaft eine Vermengung von dem Wasserstoff in dem Rohrleitungsraum hinter dem Separationsmolch und der Luft in dem Rohrleitungsraum vor dem Separationsmolch. Die Verwendung von dem Stickstoff als Inertgas zum Aufblasen der Dichtvorrichtung verhindert vorteilhaft eine Vermischung von Wasserstoff und Sauerstoff in einem Leckage- und/oder Undichtigkeits-Szenario der Dichtvorrichtung. Der Separationsmolch wird in der Praxis für die Flutung der Leitung mit Wasserstoff bevorzugt durch den Druck des flutenden Wasserstoffs innerhalb der Rohrleitung vorangetrieben.

Die Medium-Bestandteile des Mediums sind bevorzugt als einzelne Gase oder als GasGemische zu verstehen. Die Medium-Bestandteile werden im Rahmen der Erfindung durch die Separationsvorrichtung aus dem Medium in der Rohrleitung separiert. Besonders bevorzugt ist der erfindungsgemäße Separationsmolch für das voranstehend beschriebene Beispiel mit Stickstoff oder einem anderen Inertgas als Medium-Bestandteil für das Aufblasen der zumindest abschnittsweise aufblasbaren Dichtvorrichtung.

Ein derart ausgestalteter Separationsmolch ist besonders vorteilhaft, da ein Separieren von dem Medium in einer Rohrleitung und ein Abdichten des Separationsmolchs gegen die Rohrleitung besonders einfach ermöglicht wird. Der Separationsmolch ermöglicht die erfindungsgemäße Funktion der Trennung der Medien vor und hinter dem Separationsmolch in der Rohrleitung und bedient sich für die Abdichtung der Rohrleitung vorteilhaft den bereits vorhandenen Medien innerhalb der Rohrleitung. Durch die Separationsvorrichtung ermöglicht der Separationsmolch eine Verwendung von lediglich einem Medium-Bestandteil zum Aufblasen der Dichtvorrichtung und somit beispielsweise eine Einhaltung von sicherheitsrelevanten Vorgaben für den Betrieb einer Rohrleitung.

Gemäß einer bevorzugten Weiterentwicklung der Erfindung kann bei einem Separationsmolch vorgesehen sein, dass die Dichtvorrichtung umlaufend an dem Grundkörper angeordnet ist und/oder zumindest abschnittsweise in einer Nut des Grundkörpers angeordnet ist. Eine Abdichtung des Separationsmolchs, insbesondere des Grundkörpers, gegen die Rohrleitung erfolgt besonders vorteilhaft, wenn die Dichtvorrichtung umlaufend an dem Grundkörper angeordnet ist und/oder zumindest abschnittsweise in einer Nut des Grundkörpers angeordnet ist. Die Anordnung der Dichtvorrichtung zumindest abschnittsweise in einer Nut des Grundkörpers ermöglicht vorteilhaft eine Positionsstabilität der Dichtvorrichtung sowie eine vorteilhafte Vergrößerung der Dichtvorrichtung ohne einen Spalt zwischen dem Grundkörper und der Rohrleitung zu vergrößern. Die umlaufende Ausgestaltung der Dichtvorrichtung ermöglicht vorteilhaft eine entsprechende umlaufende Abdichtung durch die Dichtvorrichtung und somit eine vorteilhafte Fluidtrennung innerhalb der Rohrleitung. Ein derart ausgestalteter Separationsmolch ist besonders vorteilhaft, da durch die Ausgestaltung der Dichtvorrichtung ein Separieren von dem Medium in einer Rohrleitung und ein Abdichten des Separationsmolchs gegen die Rohrleitung besonders einfach ermöglicht wird.

Gemäß einer bevorzugten Weiterentwicklung der Erfindung kann bei einem Separationsmolch vorgesehen sein, dass der Separationsmolch zumindest zwei zumindest abschnittsweise aufblasbare Dichtvorrichtungen umfasst, wobei die zumindest zwei Dichtvorrichtungen durch die Separationsvorrichtung mit dem Medium-Bestandteil aufblasbar sind und/oder wobei die zumindest zwei Dichtvorrichtungen axial nebeneinander angeordnet sind. Eine zweifache und/oder redundante Ausführung der zumindest abschnittsweise aufblasbare Dichtvorrichtung ermöglicht eine besonders vorteilhafte Abdichtung des Separationsmolchs gegen die Rohrleitung. Bevorzugt sind die zwei Dichtvorrichtungen axial, also entlang einer Achse der Rohrleitung und/oder des Separationsmolchs zueinander verschoben angeordnet, sodass eine doppelte Abdichtung, insbesondere hintereinander, in der Rohrleitung durch den Separationsmolch ermöglicht wird. Neben der erhöhten Abdichtung und der verbesserten Abdichtung bei beispielsweise einer Beschädigung einer der Dichtvorrichtungen, ist eine zumindest doppelte Ausgestaltung der Dichtvorrichtung besonders vorteilhaft für Abzweigungen innerhalb der Rohrleitung. Durch die zumindest zwei Dichtvorrichtungen wird bevorzugt eine Abdichtung des Separationsmolchs gegen die Rohrleitung auch dann ermöglicht, wenn die Rohrleitung eine Abzweigung aufweist. Bevorzugt sind die zumindest zwei Dichtvorrichtungen dafür derart zueinander beabstandet, dass ein branchenüblicher Durchmesser einer Abzweigung berücksichtigt wird und eine Abdichtung des Separationsmolchs gegen die Rohrleitung gewährleistet ist. Ein derart ausgestalteter Separationsmolch ist besonders vorteilhaft, da durch die Ausgestaltung der zumindest zwei Dichtvorrichtungen ein Separieren von dem Medium in einer Rohrleitung und ein Abdichten des Separationsmolchs gegen die Rohrleitung besonders einfach ermöglicht wird.

Gemäß einer bevorzugten Weiterentwicklung der Erfindung kann bei einem Separationsmolch vorgesehen sein, dass der Separationsmolch zumindest ein Dichtelement umfasst, wobei das Dichtelement nicht aufblasbar, umlaufend an und/oder in dem Grundkörper und/oder mechanisch ausgestaltet ist. Das zumindest eine Dichtelement ist bevorzugt als Dichtlippe und/oder als Dichtprofil ausgestaltet und/oder ist im Gegensatz zur Dichtvorrichtung eben nicht aufblasbar ausgestaltet. Das zumindest eine Dichtelement erfüllt eine zusätzliche Dichtfunktion zu der Dichtvorrichtung und ist insbesondere auch bei beispielsweise einer Beschädigung der Separationsvorrichtung, einer Verstopfung von Leitungen des Separationsmolchs und/oder einem Energieverlust funktionsfähig und ermöglich bevorzugt eine zumindest grundsätzliche Abdichtung des Separationsmolchs gegen die Rohrleitung. Ein derart ausgestalteter Separationsmolch ist besonders vorteilhaft, da durch die Dichtvorrichtung ein Separieren von dem Medium in einer Rohrleitung und ein Abdichten des Separationsmolchs gegen die Rohrleitung besonders einfach ermöglicht wird.

Gemäß einer bevorzugten Weiterentwicklung der Erfindung kann bei einem Separationsmolch vorgesehen sein, dass die Separationsvorrichtung eine Mediumfördervorrichtung umfasst, wobei die Mediumfördervorrichtung zur Förderung von dem Medium und den zumindest zwei Medium-Bestandteilen in und aus der Separationsvorrichtung ausgestaltet ist und/oder wobei die Mediumfördervorrichtung zum Aufblasen der Dichtvorrichtung mit einem Medium-Bestandteil ausgestaltet ist. Die Mediumfördervorrichtung ist bevorzugt als Verdichtervorrichtung und/oder Pumpenvorrichtung ausgestaltet. Die Mediumfördervorrichtung ist aktiv oder passiv ausgestaltet. Eine aktive Mediumfördervorrichtung ermöglicht eine Förderung des Mediums und/oder zumindest eines der Medium-Bestandteile durch beispielsweise einen elektrischen Antrieb und/oder bewegte Fördervorrichtungen der Mediumfördervorrichtung. Eine passive Mediumfördervorrichtung ermöglicht bevorzugt eine Förderung des Mediums ohne bewegte Bauteile, beispielsweise in Form einer Strahlpumpe. Die Mediumfördervorrichtung ist bevorzugt mit der Separationsvorrichtung und/oder der zumindest abschnittsweise aufblasbare Dichtvorrichtung fluidkommunizierend verbunden. Die Mediumfördervorrichtung ist bevorzugt innerhalb des Grundkörpers des Separationsmolchs ausgestaltet. Ein derart ausgestalteter Separationsmolch ist besonders vorteilhaft, da durch die Mediumfördervorrichtung ein Separieren von dem Medium in einer Rohrleitung und ein Abdichten des Separationsmolchs gegen die Rohrleitung besonders einfach ermöglicht wird.

Gemäß einer bevorzugten Weiterentwicklung der Erfindung kann bei einem Separationsmolch vorgesehen sein, dass die Separationsvorrichtung zumindest eine Separationseinheit zum Separieren des Mediums aus der Rohrleitung in zumindest zwei Medium-Bestandteile umfasst. Das Separieren des Mediums in die zumindest zwei Medium-Bestandteile erfolgt bevorzugt durch zumindest eine Separationseinheit, insbesondere eine Separationsmembran. Die zumindest eine Separationseinheit ist bevorzugt austauschbar in und/oder an der Separationsvorrichtung angeordnet und/oder befestigt. Bevorzugt umfasst die Separationsvorrichtung eine Erfassungseinheit zur Erfassung eines Zustands der zumindest einen Separationseinheit. Optional umfasst die Separationsvorrichtung und/oder der Separationsmolch eine Anzeigevorrichtung zur Anzeige des Zustands der zumindest einen Separationseinheit und/oder eine Schnittstelle zur Ausgabe des Zustands der zumindest einen Separationseinheit. Ein derart ausgestalteter Separationsmolch ist besonders vorteilhaft, da durch die zumindest eine Separationseinheit ein Separieren von dem Medium in einer Rohrleitung und ein Abdichten des Separationsmolchs gegen die Rohrleitung besonders einfach ermöglicht wird.

Gemäß einer bevorzugten Weiterentwicklung der Erfindung kann bei einem Separationsmolch vorgesehen sein, dass der Separationsmolch zumindest zwei Grundkörper umfasst, wobei jeder der zumindest zwei Grundkörper zumindest eine zumindest abschnittsweise aufblasbare Dichtvorrichtung zur Abdichtung des Separationsmolchs gegen die Rohrleitung umfasst, wobei die Dichtvorrichtungen jeweils mit der Separationsvorrichtung verbunden sind. Bevorzugt umfasst jeder der Grundkörper jeweils zumindest zwei Dichtvorrichtungen, insbesondere wobei die zumindest zwei Dichtvorrichtungen axial hintereinander an und/oder um den jeweiligen Grundkörper angeordnet sind. Der Separationsmolch mit zumindest zwei Grundkörper weist eine oder mehrere Separationsvorrichtungen auf. Bevorzugt weist der Separationsmolch mit zumindest zwei Grundkörper lediglich im vordersten und/oder ersten Grundkörper eine Separationsvorrichtung auf. Die Separationsvorrichtung ist jeweils mit den Dichtvorrichtungen der Grundkörper fluidkommunizierend verbunden. Die Grundkörper und/oder die Verbindung der Grundkörper sind bevorzugt zumindest abschnittsweise modular ausgestaltet, sodass eine Verbindung von mehreren Grundkörpern vorteilhaft ermöglicht ist. Die Verwendung von zumindest zwei Grundkörpern ermöglicht vorteilhaft die Abdichtung von zuvor bereits beschriebenen Abzweigungen innerhalb der Rohrleitung. Durch die zumindest zwei Grundkörper mit jeweils zumindest einer Dichtvorrichtungen wird bevorzugt eine Abdichtung des Separationsmolchs gegen die Rohrleitung auch dann ermöglicht, wenn die Rohrleitung eine Abzweigung aufweist. Ein derart ausgestalteter Separationsmolch ist besonders vorteilhaft, da durch die zumindest zwei Grundkörper ein Separieren von dem Medium in einer Rohrleitung und ein Abdichten des Separationsmolchs gegen die Rohrleitung besonders einfach ermöglicht wird.

Gemäß einer bevorzugten Weiterentwicklung der Erfindung kann bei einem Separationsmolch vorgesehen sein, dass die zumindest zwei Grundkörper mit zumindest einer Verbindungsvorrichtung miteinander beweglich verbunden sind. Die Verbindungsvorrichtung ist bevorzugt als Gelenkvorrichtung und/oder als flexible Verbindungsvorrichtung ausgestaltet. Die Verbindungvorrichtung weist bevorzugt eine Leitungs- und/oder Kabelführung, insbesondere im Inneren der Verbindungsvorrichtung zur vorteilhaften Verbindung der zumindest zwei Grundkörper auf. Die Verbindungsvorrichtung ermöglicht bevorzugt eine Beweglichkeit, insbesondere in zumindest oder genau zwei Raumebenen, der zumindest zwei Grundkörper zueinander und ermöglicht somit folglich eine vorteilhafte Verwendung des Separationsmolchs auch für gebogene Abschnitte einer Rohrleitung. Ein derart ausgestalteter Separationsmolch ist besonders vorteilhaft, da durch die zumindest zwei Grundkörper ein Separieren von dem Medium in einer Rohrleitung und ein Abdichten des Separationsmolchs gegen die Rohrleitung besonders einfach ermöglicht wird.

Gemäß einer bevorzugten Weiterentwicklung der Erfindung kann bei einem Separationsmolch vorgesehen sein, dass der Separationsmolch zumindest eine Sensorvorrichtung umfasst, wobei die Sensorvorrichtung zur Erfassung zumindest eines Messwerts innerhalb der Rohrleitung ausgestaltet ist. Die Sensorvorrichtung umfasst bevorzugt zumindest einen Gaserfassungs-Sensor zur Erfassung von Gas, von Gasen, von Gaskonzentrationen und/oder von Gas-Bestandteilen. Bevorzugt ist die zumindest eine Sensorvorrichtung zwischen zwei Dichtvorrichtungen, insbesondere zwischen zwei Dichtvorrichtungen eines Grundkörpers, angeordnet, um eine Funktionsfähigkeit und Abdichtung der Dichtvorrichtungen zu überprüfen. Alternativ oder zusätzlich ist die zumindest eine Sensorvorrichtung stirnseitig vor und/oder hinter dem Grundkörper angeordnet, um beispielsweise eine Gaszusammenstellung vor und/oder hinter dem Separationsmolch zu erfassen. Die zumindest eine Sensorvorrichtung umfasst bevorzugt eine Schnittstelle zur Ausgabe der erfassten Daten und/oder eine Anzeigevorrichtung zur Anzeige der erfassten Daten. Alternativ oder zusätzlich umfasst die Sensorvorrichtung eine Speichervorrichtung zur Speicherung der erfassten Daten. Ein derart ausgestalteter Separationsmolch ist besonders vorteilhaft, da durch die zumindest eine Sensorvorrichtung ein Separieren von dem Medium in einer Rohrleitung und ein Abdichten des Separationsmolchs gegen die Rohrleitung besonders einfach ermöglicht wird.

Gemäß einer bevorzugten Weiterentwicklung der Erfindung kann bei einem Separationsmolch vorgesehen sein, dass der Separationsmolch zumindest eine Speichervorrichtung umfasst, wobei die Speichervorrichtung zur Speicherung des Mediums und/oder zumindest eines Medium-Bestandteils ausgestaltet ist. Die zumindest eine Speichervorrichtung ist bevorzugt mit der Separationsvorrichtung fluidkommunizierend verbunden. Beispielhaft wird durch die Separationsvorrichtung Luft aus dem Rohrleitungsraum vor dem Separationsmolch entnommen und in Sauerstoff und Stickstoff separiert. Der Stickstoff wird, wie voranstehend beschrieben, zum Aufblasen der Dichtvorrichtungen genutzt. Der Sauerstoff wird bevorzugt in der zumindest einen Speichervorrichtung gespeichert, um eine zu hohe Konzentration an Sauerstoff in dem Rohrleitungsraum vor dem Separationsmolch zu vermeiden. Die zumindest eine Speichervorrichtung ist als Speichertank und/oder als Speichervorrichtung zur chemischen Bindung des Medium-Bestandteils ausgestaltet. Eine Speicherung des Medium-Bestandteils oder der restlichen Medium-Bestandteile, die nicht zum Aufblasen der Dichtvorrichtung verwendet werden, erfolgt zusätzlich oder alternativ zu einem voranstehend beschriebenen Ausscheiden des Medium-Bestandteils oder der restlichen Medium-Bestandteile. Bevorzugt erfolgt das Speichern und/oder Ausscheiden des Medium-Bestandteils oder der restlichen Medium-Bestandteile in Abhängigkeit von einem erfassten Messwert durch die zuvor beschriebene Sensorvorrichtung. Beispielsweise erfasst die Sensorvorrichtung eine Stickstoff- und/oder Sauerstoff-Konzentration vor dem Separationsmolch und steuert in Abhängigkeit von dem erfassten Messwert ein Speichern und/oder Ausscheiden des Medium-Bestandteils oder der restlichen Medium-Bestandteile. Ein derart ausgestalteter Separationsmolch ist besonders vorteilhaft, da durch die zumindest eine Speichervorrichtung ein Separieren von dem Medium in einer Rohrleitung und ein Abdichten des Separationsmolchs gegen die Rohrleitung besonders einfach ermöglicht wird.

Gemäß einer bevorzugten Weiterentwicklung der Erfindung kann bei einem Separationsmolch vorgesehen sein, dass der Separationsmolch zumindest eine Energievorrichtung umfasst, wobei die Energievorrichtung zur Speicherung und/oder zur Bereitstellung von Energie an den Separationsmolch ausgestaltet ist. Die Energievorrichtung kann eine aufladbare Energiequelle umfassen und/oder beispielsweise als Brennstoffzelle ausgestaltet sein. Bevorzugt ist die zumindest eine Energievorrichtung fluidkommunizierend mit der Rohrleitung vor und/oder hinter dem Separationsmolch verbunden, beispielsweise über zumindest eine Treibstoffschnittstelle, bevorzugt an einer Stirnseite des Separationsmolchs. Die zumindest eine Energievorrichtung versorgt bevorzugt die beschriebene Mediumfördervorrichtung und/oder andere Vorrichtungen des Separationsmolchs. Ein derart ausgestalteter Separationsmolch ist besonders vorteilhaft, da durch die zumindest eine Energievorrichtung ein Separieren von dem Medium in einer Rohrleitung und ein Abdichten des Separationsmolchs gegen die Rohrleitung besonders einfach ermöglicht wird.

Gemäß einer bevorzugten Weiterentwicklung der Erfindung kann bei einem Separationsmolch vorgesehen sein, dass der Separationsmolch, insbesondere der Grundkörper, die Dichtvorrichtung und/oder das Dichtelement, eine Gleitvorrichtung und/oder eine Führungsvorrichtung zum Gleiten und/oder Führen des Separationsmolchs innerhalb der Rohrleitung umfasst. Die Gleitvorrichtung ist bevorzugt als Oberflächenbeschichtung, als Gleitmaterial und/oder als Gleitfilm an und/oder auf dem Grundkörper, der Dichtvorrichtung und/oder dem Dichtelement ausgestaltet. Die Gleitvorrichtung ermöglicht vorteilhaft die Bewegung des Separationsmolchs durch die Rohrleitung bei gleichzeitig vorteilhafter Abdichtung des Separationsmolchs gegen die Rohrleitung. Der Separationsmolch wird beispielsweise mit 3 bis 7 m/s durch die Rohrleitung bewegt. Die Bewegung des Separationsmolchs erfolgt bevorzugt durch einen Gasdruck hinter dem Separationsmolch. Eine vorteilhafte Ausgestaltung des Separationsmolchs mit zumindest einer Gleitvorrichtung ermöglicht somit eine gute Abdichtung im Betrieb des Separationsmolchs und ferner bevorzugt eine geringe Abnutzung der Vorrichtungen und somit eine verlängerte Lebenszeit und/oder geringere Wartungskosten. Ein derart ausgestalteter Separationsmolch ist besonders vorteilhaft, da durch die zumindest eine Gleitvorrichtung ein Separieren von dem Medium in einer Rohrleitung und ein Abdichten des Separationsmolchs gegen die Rohrleitung besonders einfach ermöglicht wird.

Gemäß einem zweiten Aspekt der Erfindung wird die Aufgabe durch ein Separationsverfahren zum Separieren von einem Medium in einer Rohrleitung durch einen Separationsmolch und zum Abdichten des Separationsmolchs gegen die Rohrleitung gelöst. Das Separationsverfahren umfasst:
- Separieren des Mediums aus der Rohrleitung in zumindest zwei Medium-Bestandteile durch eine Separationsvorrichtung des Separationsmolchs,
- Aufblasen einer zumindest abschnittsweise aufblasbaren Dichtvorrichtung des Separationsmolchs mit einem Medium-Bestandteil zum Abdichten des Separationsmolchs gegen die Rohrleitung.

Die zuvor und die im Nachfolgenden beschrieben Verfahrensschritte können, wenn nicht explizit anderweitig angegeben, einzeln, zusammen, einfach, mehrfach, zeitlich parallel und/oder nacheinander in beliebiger Reihenfolge ausgeführt werden. Eine Benennung als beispielsweise "erster Verfahrensschritt" und "zweiter Verfahrensschritt" bedingt keine zeitliche Reihenfolge und/oder Priorisierung. Eine bevorzugte Reihenfolge der Verfahrensschritte sieht vor, dass die Verfahrensschritte in der aufgeführten Reihenfolge ausgeführt werden.

Das Aufblasen der zumindest abschnittsweise aufblasbaren Dichtvorrichtung erfolgt bevorzugt durch die Separationsvorrichtung und/oder eine Mediumfördervorrichtung des Separationsmolchs. Das Aufblasen ist bevorzugt als Förderung von einem Medium in die aufblasbare Dichtvorrichtung zum zumindest abschnittsweise Vergrößern des Volumens der aufblasbaren Dichtvorrichtung zu verstehen, um eine Abdichtung durch die aufblasbare Dichtvorrichtung gegen die Rohrleitung zu ermöglichen. Die Separationsvorrichtung und die Dichtvorrichtung sind bevorzugt fluidkommunizierend miteinander verbunden.

Der Separationsmolch ist insbesondere gemäß dem ersten Aspekt ausgestaltet, sodass sich bei dem beschriebenen Separationsverfahren sämtliche Vorteile ergeben, die bereits zu dem Separationsmolch gemäß dem ersten Aspekt der Erfindung beschrieben worden sind.

Ein derart ausgestaltetes Separationsverfahren ist besonders vorteilhaft, da durch den Separationsmolch ein Separieren von dem Medium in einer Rohrleitung und ein Abdichten des Separationsmolchs mit nur einem Medium-Bestandteil gegen die Rohrleitung besonders einfach ermöglicht wird.

Ein erfindungsgemäßer Separationsmolch und ein Separationsverfahren werden nachfolgend anhand von Zeichnungen näher erläutert. Es zeigen jeweils schematisch:
- Figur 1: in einer geschnittenen Seitenansicht ein Separationsmolch mit einem Grundkörper in einer Rohrleitung,
- Figur 2: in einer geschnittenen Seitenansicht ein Separationsmolch mit zwei Grundkörpern in einer Rohrleitung, und
- Figur 3: in einem Flussdiagramm eine erfindungsgemäße Ausgestaltung des Separationsverfahrens.
Elemente mit gleicher Funktion und Wirkungsweise sind in den Fig. 1 bis 3 jeweils mit denselben Bezugszeichen versehen.

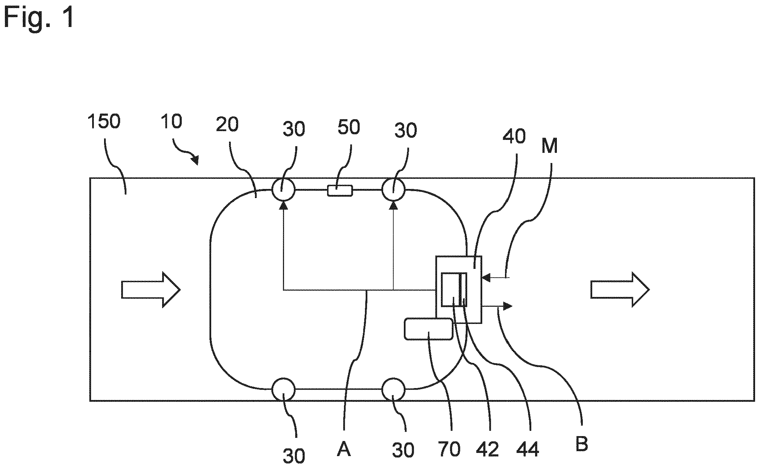

In Fig. 1 ist schematisch in einer geschnittenen Seitenansicht ein Separationsmolch 10 mit einem Grundkörper 20 in einer Rohrleitung 150 gezeigt. Der Separationsmolch 10 ist zum Separieren 202 von einem Medium M in der Rohrleitung 150 und zum Abdichten des Separationsmolchs 10 gegen die Rohrleitung 150 ausgestaltet. Der Separationsmolch 10 umfasst den Grundkörper 20, zwei aufblasbare Dichtvorrichtungen 30 zum Abdichten des Separationsmolchs 10 gegen die Rohrleitung 150 und eine Separationsvorrichtung 40. Die Separationsvorrichtung 40 ist zum Separieren 202 des Mediums M aus der Rohrleitung 150 in zumindest zwei Medium-Bestandteile A, B und zum Aufblasen 204 der Dichtvorrichtung 30 mit einem Medium-Bestandteil A ausgestaltet. Die zwei Dichtvorrichtungen 30 sind umlaufend an dem Grundkörper 20 und in jeweils einer Nut des Grundkörpers 20 angeordnet. Die zwei Dichtvorrichtungen 30 sind axial nebeneinander angeordnet. Die Separationsvorrichtung 40 umfasst eine Mediumfördervorrichtung 42, wobei die Mediumfördervorrichtung 42 zur Förderung von dem Medium M und den zumindest zwei Medium-Bestandteilen A, B in und aus der Separationsvorrichtung 40 ausgestaltet ist. Die Mediumfördervorrichtung 42 ist ferner zum Aufblasen 204 der Dichtvorrichtung 30 mit dem Medium-Bestandteil A ausgestaltet. Die Separationsvorrichtung 40 umfasst eine Separationseinheit 44 zum Separieren 202 des Mediums M aus der Rohrleitung 150 in zumindest zwei Medium-Bestandteile A, B. Der Separationsmolch 10 umfasst eine Sensorvorrichtung 50 zwischen den zwei Dichtvorrichtungen 30, wobei die Sensorvorrichtung 50 zur Erfassung zumindest eines Messwerts innerhalb der Rohrleitung 150 ausgestaltet ist. Der Separationsmolch 10 umfasst eine Energievorrichtung 70, wobei die Energievorrichtung 70 zur Speicherung und zur Bereitstellung von Energie an den Separationsmolch 10 ausgestaltet ist.

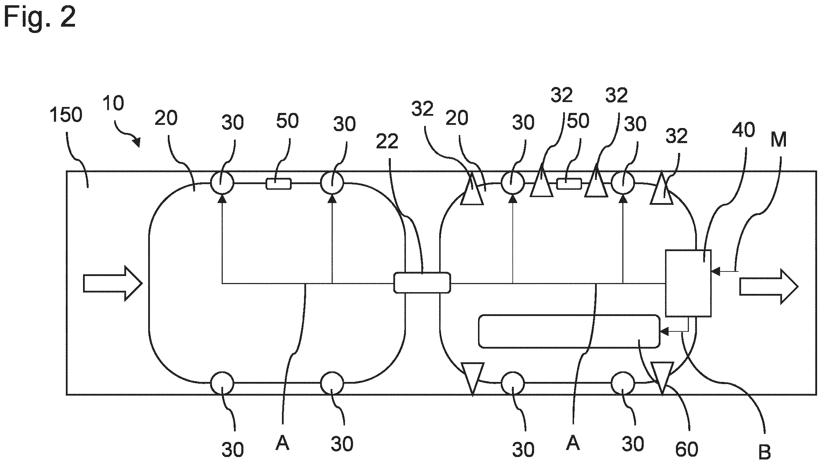

In Fig. 2 ist schematisch in einer geschnittenen Seitenansicht ein Separationsmolch 10 mit zwei Grundkörpern 20 in einer Rohrleitung 150 gezeigt. Der Separationsmolch 10 umfasst zwei Grundkörper 20, wobei jeder der zwei Grundkörper 20 zwei aufblasbare Dichtvorrichtungen 30 zur Abdichtung des Separationsmolchs 10 gegen die Rohrleitung 150 umfasst. Die Dichtvorrichtungen 30 sind jeweils mit der Separationsvorrichtung 40 des Separationsmolchs 10 verbunden. Die zwei Grundkörper 20 sind mit einer Verbindungsvorrichtung 22 miteinander beweglich verbunden. Die jeweils zwei Dichtvorrichtungen 30 sind umlaufend an dem jeweiligen Grundkörper 20 und in jeweils einer Nut des jeweiligen Grundkörpers 20 angeordnet. Die Dichtvorrichtungen 30 sind axial nebeneinander angeordnet. Der Separationsmolch 10 umfasst jeweils eine Sensorvorrichtung 50 zwischen den zwei Dichtvorrichtungen 30 des jeweiligen Grundkörpers 20, wobei die Sensorvorrichtungen 50 zur Erfassung zumindest eines Messwerts innerhalb der Rohrleitung 150 ausgestaltet sind. Der Separationsmolch 10, hier der rechte Grundkörper 20 umfasst zwei Dichtelemente 32, wobei die zwei Dichtelemente 32 nicht aufblasbar, umlaufend an und in dem rechten Grundkörper 20 und mechanisch ausgestaltet sind. Der Separationsmolch 10 umfasst eine Speichervorrichtung 60, wobei die Speichervorrichtung 60 zur Speicherung eines Medium-Bestandteils B ausgestaltet ist.

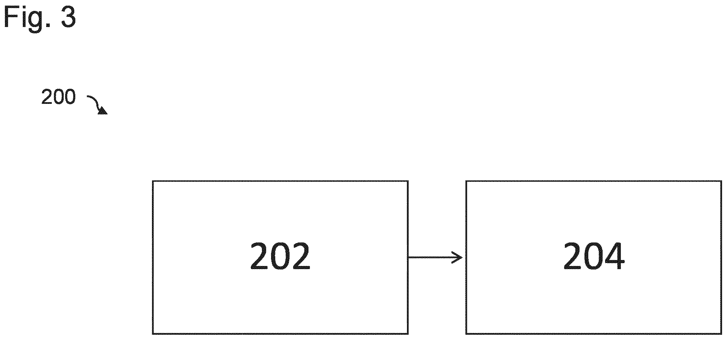

In Fig. 3 ist schematisch in einem Flussdiagramm eine erfindungsgemäße Ausgestaltung des Separationsverfahrens 200 gezeigt. Für eine verbesserte Übersichtlichkeit sind in Fig. 3 nur die Bezugszeichen der Verfahrensschritte angegeben. Das Separationsverfahren 200 umfasst in einem ersten Verfahrensschritt das Separieren 202 des Mediums M aus der Rohrleitung 150 in zumindest zwei Medium-Bestandteile A, B durch eine Separationsvorrichtung 40 des Separationsmolchs 10. Das Separationsverfahren 200 umfasst in einem weiteren Verfahrensschritt das Aufblasen 204 einer zumindest abschnittsweise aufblasbaren Dichtvorrichtung 30 des Separationsmolchs 10 mit einem Medium-Bestandteil A zum Abdichten des Separationsmolchs 10 gegen die Rohrleitung 150.

### Bezuaszeichenliste

- 10: Separationsmolch

- 20: Grundkörper
- 22: Verbindungsvorrichtung

- 30: Dichtvorrichtung
- 32: Dichtelement

- 40: Separationsvorrichtung
- 42: Mediumfördervorrichtung
- 44: Separationseinheit

- 50: Sensorvorrichtung

- 60: Speichervorrichtung

- 70: Energievorrichtung

- 150: Rohrleitung

- 200: Separationsverfahren
- 202: Separieren
- 204: Aufblasen

- A: Medium-Bestandteil
- B: Medium-Bestandteil
- M: Medium

## Patentansprüche

1. Separationsmolch (10) zum Separieren (202) von einem Medium (M) in einer Rohrleitung (150) und zum Abdichten des Separationsmolchs (10) gegen die Rohrleitung (150), der Separationsmolch (10) umfassend einen Grundkörper (20), eine zumindest abschnittsweise aufblasbare Dichtvorrichtung (30) zum Abdichten des Separationsmolchs (10) gegen die Rohrleitung (150) und eine Separationsvorrichtung (40), wobei die Separationsvorrichtung (40) zum Separieren (202) des Mediums (M) aus der Rohrleitung (150) in zumindest zwei Medium-Bestandteile (A, B) und zum Aufblasen (204) der Dichtvorrichtung (30) mit einem Medium-Bestandteil (A) ausgestaltet ist.

2. Separationsmolch (10) nach Anspruch 1,
**dadurch gekennzeichnet,**
**dass** die Dichtvorrichtung (30) umlaufend an dem Grundkörper (20) angeordnet ist und/oder zumindest abschnittsweise in einer Nut des Grundkörpers (20) angeordnet ist.

3. Separationsmolch (10) nach einem der vorangegangenen Ansprüche,
**dadurch gekennzeichnet,**
**dass** der Separationsmolch (10) zumindest zwei zumindest abschnittsweise aufblasbare Dichtvorrichtungen (30) umfasst, wobei die zumindest zwei Dichtvorrichtungen (30) durch die Separationsvorrichtung (40) mit dem Medium-Bestandteil (A) aufblasbar sind und/oder wobei die zumindest zwei Dichtvorrichtungen (30) axial nebeneinander angeordnet sind.

4. Separationsmolch (10) nach einem der vorangegangenen Ansprüche,
**dadurch gekennzeichnet,**
**dass** der Separationsmolch (10) zumindest ein Dichtelement (32) umfasst, wobei das Dichtelement (32) nicht aufblasbar, umlaufend an und/oder in dem Grundkörper (20) und/oder mechanisch ausgestaltet ist.

5. Separationsmolch (10) nach einem der vorangegangenen Ansprüche,
**dadurch gekennzeichnet,**
**dass** die Separationsvorrichtung (40) eine Mediumfördervorrichtung (42) umfasst, wobei die Mediumfördervorrichtung (42) zur Förderung von dem Medium (M) und den zumindest zwei Medium-Bestandteilen (A, B) in und aus der Separationsvorrichtung (40) ausgestaltet ist und/oder wobei die Mediumfördervorrichtung (42) zum Aufblasen (204) der Dichtvorrichtung (30) mit einem Medium-Bestandteil (A) ausgestaltet ist.

6. Separationsmolch (10) nach einem der vorangegangenen Ansprüche,
**dadurch gekennzeichnet,**
**dass** die Separationsvorrichtung (40) zumindest eine Separationseinheit (44) zum Separieren (202) des Mediums (M) aus der Rohrleitung (150) in zumindest zwei Medium-Bestandteile (A, B) umfasst.

7. Separationsmolch (10) nach einem der vorangegangenen Ansprüche,
**dadurch gekennzeichnet,**
**dass** der Separationsmolch (10) zumindest zwei Grundkörper (20) umfasst, wobei jeder der zumindest zwei Grundkörper (20) zumindest eine zumindest abschnittsweise aufblasbare Dichtvorrichtung (30) zur Abdichtung des Separationsmolchs (10) gegen die Rohrleitung (150) umfasst, wobei die Dichtvorrichtungen (30) jeweils mit der Separationsvorrichtung (40) verbunden sind.

8. Separationsmolch (10) nach Anspruch 7,
**dadurch gekennzeichnet,**
**dass** die zumindest zwei Grundkörper (20) mit zumindest einer Verbindungsvorrichtung (22) miteinander beweglich verbunden sind.

9. Separationsmolch (10) nach einem der vorangegangenen Ansprüche,
**dadurch gekennzeichnet,**
**dass** der Separationsmolch (10) zumindest eine Sensorvorrichtung (50) umfasst, wobei die Sensorvorrichtung (50) zur Erfassung zumindest eines Messwerts innerhalb der Rohrleitung (150) ausgestaltet ist.

10. Separationsmolch (10) nach einem der vorangegangenen Ansprüche,
**dadurch gekennzeichnet,**
**dass** der Separationsmolch (10) zumindest eine Speichervorrichtung (60) umfasst, wobei die Speichervorrichtung (60) zur Speicherung des Mediums (M) und/oder zumindest eines Medium-Bestandteils (A, B) ausgestaltet ist.

11. Separationsmolch (10) nach einem der vorangegangenen Ansprüche,
**dadurch gekennzeichnet,**
**dass** der Separationsmolch (10) zumindest eine Energievorrichtung (70) umfasst, wobei die Energievorrichtung (70) zur Speicherung und/oder zur Bereitstellung von Energie an den Separationsmolch (10) ausgestaltet ist.

12. Separationsmolch (10) nach einem der vorangegangenen Ansprüche,
**dadurch gekennzeichnet,**
**dass** der Separationsmolch (10), insbesondere der Grundkörper (20), die Dichtvorrichtung (30) und/oder das Dichtelement (32), eine Gleitvorrichtung und/oder eine Führungsvorrichtung zum Gleiten und/oder Führen des Separationsmolchs (10) innerhalb der Rohrleitung (150) umfasst.

13. Separationsverfahren (200) zum Separieren (202) von einem Medium (M) in einer Rohrleitung (150) durch einen Separationsmolch (10) und zum Abdichten des Separationsmolchs (10) gegen die Rohrleitung (150), insbesondere nach einem der vorangegangenen Ansprüche, das Separationsverfahren (200) umfassend:
- Separieren (202) des Mediums (M) aus der Rohrleitung (150) in zumindest zwei Medium-Bestandteile (A, B) durch eine Separationsvorrichtung (40) des Separationsmolchs (10),
- Aufblasen (204) einer zumindest abschnittsweise aufblasbaren Dichtvorrichtung (30) des Separationsmolchs (10) mit einem Medium-Bestandteil (A) zum Abdichten des Separationsmolchs (10) gegen die Rohrleitung (150).
